Europäisches Patentamt

European Patent Office

Office européen des brevets

(11) Publication number: 0 355 526 A2

## EUROPEAN PATENT APPLICATION

(21) Application number: 89114435.4

(22) Date of filing: 04.08.89

(51) Int. Cl.⁴: C21C 7/064 , C21C 7/076

(30) Priority: 23.08.88 IT 6520488

(43) Date of publication of application:
28.02.90 Bulletin 90/09

(84) Designated Contracting States:
BE CH ES FR LI NL

(71) Applicant: Crespi, Giovanni
Corso Inglesi 569
I-18038 San Remo (Imperia)(IT)

(72) Inventor: Crespi, Giovanni
Corso Inglesi 569
I-18038 San Remo (Imperia)(IT)

(74) Representative: Coloberti, Luigi
Via E. de Amicis No. 25
I-20123 Milano(IT)

(54) Desulphurising flux composition for basic steel-slags and relevant method.

(57) By forming a mixture of 10 to 30% fluorine-free feldspathic mineral silicates and 90 to 70% of an additive based on lime granules, calcium limestone or a mixture thereof, pre-treated in a solution of alkaline salts, a desulphurising flux composition for basic steel-manufacturing slag is obtained which is added to the normal slag-forming agent in a proportion of 15 to 20% of the total weight of the slag-forming agent. The components of this mixture are prepared separately and then pre-mixed before being fed into the furnace or ladle together with the slag-forming agent.

EP 0 355 526 A2

# DESULPHURISING FLUX COMPOSITION FOR BASIC STEEL-SLAGS AND RELEVANT METHOD

This invention relates to a desulphurising flux composition to be used in steel manufacturing for facilitating the formation of basic slag on molten metal, both in final working stage and in ladle processing; the invention relates also to a method for producing the flux composition.

It is known that the desulphurising effect of basic slag in LD or similar melting furnaces or electric arc furnaces or electric arc furnaces is affected by various factors involving both the slag and the molten bath conditions. These factors are:
- the high fluidity and basicity of the slag

$$\frac{CaO + MgO}{SiO_2 + P_2O_5}$$

- the high temperature of the bath
- the low oxidation level of the bath and of the slag (presence of FeO);
- the composition of the bath (carbon content);
- the granule size of the basic components, and
- the high degree of mixing of the bath in the furnace or ladle.

Until now the most prevalently used flux mixtures have been based on fluorite ($CaF_2$). However, it has been noted that at the high temperatures reached in melting furnaces these compositions release gases that are injurious to the workers' health.

Recent regulations by the European Economic Community recommend the elimination or reduced use of these compositions. In the light of this need numerous flux compositions have been proposed, based on bauxite or cryolite and aluminium residue derived from aluminium manufacture or low-melting mineral silicates or with the addition of iron oxides. The results obtained with these compositions have not been satisfying either because of their meagre effect on slag formation speed, or because of their poor desulphurising capacity, or because of very high production costs.

Two European patent applications are known in this area of technology: EP-A- 0.225.560 deals with a melting composition for basic scum in steel furnaces, composed of fluorine-free silicates; EP-A-0.034.639 deals with a melting composition for steel scum, based on aluminium residue.

The object of this invention is to provide a desulphurising flux composition for the formation of basic slag which accelerates the formation of the latter while at the same time both maintaining it at a satisfactory level of fluidity and enhancing its desulphurising action. A further object of this invention is to provide a method for obtaining this composition.

This objects are achieved by using a special method for diffusing an alkaline compound in fine granules of raw limestone and/or dolomite or in previously calcined granules of limestone (CaO) and/or of calcined dolomite (CaO-MgO), based on immersing the above-mentioned granules in a saturated solution of alkaline salts, or by means of spraying, according to independent claims.

According to the invention there is provided a composition made up essentially of 10 to 30% of fluorine-free feldspathic mineral silicates - such as, for example, orthoclase, nepheline, syenite or a combination thereof - and of 90 to 70% of a special additive.

This additive can be based on lime granules to which MgO might possibly be added, or based on calcium limestone granules to which dolomite limestone might possibly be added, said material being finely ground.

The two components are prepared separately and mixed before being combined with the lime normally used for slag formation.

This additive is first heat treated or treated at ambient temperature by immersion for a fixed length of time in a saturated solution of alkaline salts, in particular Solvay Soda ($Na_2CO_3$) to which might possibly be added caustic soda or other alkaline salts.

From this treatment the material emerges in nut-like pieces, to be self-dried, in which the alkaline salts have diffused completely and uniformly. The product obtained in this way is self-dried as it passes down a metal channel that enters a vertical calcining furnace (for limestone or dolomite), where it is calcined at between 500 and 1100° C, preferably at 1000-1100° C, and then finely ground to a granule size of between 1 to 4 mm.

In order to prepare the additive, its component material, which may be lime granules, calcium limestone granules, or a combination thereof, having a granule size of 1 to 4 mm, is mixed with a saturated solution of Solvay Soda, to which may be added caustic soda, for between 5 to 14 minutes in the case of lime granules (case a) and from 25 to 30 minutes in the case of calcium limestone granules (case b). In the first case MgO may be added to the lime granules. In the second case dolomitic limestone may be added to the calcium limestone. The mixing might possibly be substituted by spraying of the sodium solution directly onto the hot or cold material. The two types of granules can also be mixed together in the ratio of 1 to 1 and then immersed in the sodium solution for a period of between 12 to 15 minutes. The absorption of the sodium solution is determined in terms of Na content in the granules and depends on the mixing time interval.

It has been noted in the cold treatment of pure lime that after 6 minutes of mixing, an Na content of 3.17% is obtained and after 12 minutes 6.3%, in relation to the weight of the granules and for a saturated solution of $Na_2CO_3$(soda); namely, of 21 gr. per 100 gr. of water.

The noted consumption of saturated solution is in the order to 15-20% of solution in relation to the weight of the material treated in case a - viz. calcium limestone and/or dolomite limestone, and 7% in case b - viz. lime with or without magnesia. The agglomerates obtained, after crushing. must be calcined at a temperature between 550 and 1100°C to eliminate bound and adsorbed water and the dissociation of the carbonates.

During the above-mentioned treatments in case b the following chemical reaction takes place:

$$Ca [Mg.] O + 2H_2O + Na_2CO_3 = Ca [Mg] (OH)_2 + Ca [Mg] CO_3 + 2NaOH$$

The calcined materials obtained must be protected from atmospheric agents and suitably packed in polythene bags or metal containers.

To the granules obtained small quantities of binder may be added - such as sodium silicate or starch, loamy, resinous, or tarry binders, - pelletized or pressed in dry ovules at a temperature between 110 and 150°C.

In order to obtain the composition according to the invention, the components are mixed at the powder state, treated with sodium carbonate, and then ground and calcined at a temperature between 1000 and 1100°C. Subsequently, the mixture obtained can be added to the lime normally used for slag formation.

The feldspathic minerals contained in the desulphurising mixture can be reduced by 50% when prolonged treatments occur with the saturated saline solutions stated previously.

The desulphurising flux composition according to this invention, suitably granulated, is used in steel manufacturing to be added to the furnace or ladle, separately or mixed with the normally used slag-forming agent, in a proportion of 15 to 20% with respect to the total weight of the slag-forming agent. This mixture can also be added into a converter, an arc furnace, and ladle furnace. In the latter case the composition must be calcined at a temperature varying between 550 and 1100°C according to the type of additive added.

It is recommended that the oxidizing slag deriving from melting or the conversion (black slag) is removed before the composition is used because in the presence of such slag the desulphurising action would be appreciably reduced, though the composition would retain its melting action.

The examples below relate to the use of compositions according to the invention not with a restrictive intent but soley to exemplify the invention.

EXAMPLE 1

The composition to be added to the bath in the furnace or separately during tapping in the ladle-furnace or pre-mixed with the line, is composed of 30% of feldspathic minerals, such as nepheline-syenite, with a granule size of about 1 mm and of 70% of suitably treated basic additive. These components are pre-mixed and added to the normal lime used in the ratio of 15-25% with respect to the total weight of the lime.

If it is assumed that lime as used normally for forming desulphurising slag corresponds to 1,5% of the weight of the bath, viz. 15 Kg per ton of bath, the addition of desulphurising mixture is 3 Kg per ton of bath - specifically, 2,10 Kg of additive and 0.90 Kg of feldspathic minerals. If the additive is prepared with limestone granules, the quantity of limestone should be increased by 70-80% to offset the dissociation of the carbonates.

· The addition is performed manually or mechanically according to the weight of the bath to be treated.

EXAMPLE 2

This example describes the addition of the mixture to a normal pre-heated ladle. In this case the granule size of the mixture must be small. The components may be added during the tapping stage either separately or pre-mixed and packed for manual addition.

Claims

1. Desulpherising flux composition for basic slag in steel manufacturing, characterised by the fact that it is composed mainly of between 10 to 30% of fluorine-free feldspathic mineral silicates and by 90 to 70% of an additive selected from lime granules, calcium limestone granules or a mixture thereof, pre-treated with a solution of alkaline salts.

2. Composition as claimed in claim 1, characterised by the fact that such feldspathic minerals are of the orthoclase, nepheline-syenite kind and a combination thereof.

3. Composition as claimed in claim 1, characterised by the fact that such an additive is based on lime granules to which MgO is added, or based on calcium limestone granules to which dolomite limestone is added.

4. Composition as claimed in claims 1 to 3 characterised by the fact that the two components are prepared separately with different procedures.

5. Composition as claimed in claims 1 to 3, characterised by the fact that it is used by being added to the furnace or the ladle, separately or mixed with a conventional slag-forming agent.

6. Composition as claimed in claim 5, characterised by the fact that the quantity used is between 15 and 20% of the total weight of the slag forming agent.

7. Method for obtaining flux composition as claimed in claim 1, characterised by the fact that the components in powder state are mixed and treated with a solution of sodium carbonate, self-dried, ground, and then calcined at a temperature between 1000 and 1100°C.

8. Method for obtaining the composition as claimed in claim 1, characterised by the fact that said additive is at first heat treated, or treated at ambient temperature, by being immersed in a solution of alkaline salts; it is then self-dried in a calcining furnace where it is calcined and subsequently ground.

9. Method as claimed in claim 8, characterised by the fact that caustic soda may possibly be added to the alkaline salt.

10. Method as claimed in claim 8, characterised by the fact that the calcining takes place at between 500 and 1100°C, preferably between 1000 and 1100°C.

11. Method as claimed in claim 8, characterised by the fact that the product is ground to a grain size of between 1 to 4 mm.

12. Method for obtaining the flux composition as claimed in claim 1, characterised by the fact that the additive is mixed with a saturated solution of Solvay Soda for between 5 and 30 minutes and the agglomerate obtained is ground by a crusher and calcined at between 550 and 1100°C.

13. Method as claimed in claim 12, characterised by the fact that the caustic soda may possibly be added to the saturated Solvay Soda solution.

14. Method as claimed in claim 12, characterised by the fact that the immersion time interval in the solution is between 5 to 14 minutes in the case of lime granules, and 25 to 30 minutes in the case of calcium limestone.

15. Method for obtaining the flux composition as claimed in claim 1, characterised by the fact that the solution of the alkaline salts especially the sodium solution is sprayed directly onto the hot or cold material.

16. Method as claimed in claim 12, characterised by the fact that the saturated alkaline solution, contains sodium aluminate or other similar alkaline salts.

17. Method as claimed in claims 12 to 16, characterised by the fact that small quantities of binders such as sodium silicate, or starchy, loamy, resinous, or tarry binder, may be added to the product obtained, said product together with the binder being pelletized or pressed into dry ovules dried at a between 110 and 150°C.